# FASCICULE DE BREVET EUROPEEN

(11) **EP 0 781 065 B1**
(45) Date de publication et mention de la délivrance du brevet: **19.11.2003**
(21) Numéro de dépôt: 96402746.0
(22) Date de dépôt: 16.12.1996
(51) Int. Cl.: H04Q 7/32, H04L 9/32, G07F 7/10

(54) **Procédé de sécurisation de l'utilisation d'un terminal d'un système de radiocommunication cellulaire et terminal correspondant**
Verfahren zur sicheren Benutzung eines Endgerätes eines zellularen Funkübertragungssystems sowie zugehöriges Endgerät
Method for securing the usage of a terminal of a cellular radio communication system and terminal therefor

(30) Priorité: 21.12.1995 FR 9515283
(43) Date de publication de la demande: 25.06.1997
(73) Titulaire: ALCATEL BUSINESS SYSTEMS, F-75008 Paris (FR)
(72) Inventeur: Pinault, Francis, 92270 Bois Colombes (FR)
(74) Mandataire: El Manouni, Josiane

(56) Documents cités:
- EP-A- 0 301 740
- DE-C- 4 242 151
- DE-U- 9 217 379
- DAVIO M ET AL: "Methodology in information security;mutual authentication procedures, application to access control" 1982 INTERNATIONAL ZURICH SEMINAR ON DIGITAL COMMUNICATIONS. MAN-MACHINE INTERACTION, ZURICH, SWITZERLAND, 9-11 MARCH 1982, 9 - 11 mars 1982, pages C4/87-92, XP002014402 1982, NEW YORK, NY, USA, IEEE, USA
- OMURA J K: "A computer dial access system based on public-key techniques" IEEE COMMUNICATIONS MAGAZINE, JULY 1987, USA, vol. 25, no. 7, juillet 1987, pages 73-79, XP002014403 ISSN 0163-6804

## Description

Le domaine de l'invention est celui des systèmes de radiocommunication cellulaire avec des terminaux (également appelés stations mobiles). Dans le domaine de la radiocommunication cellulaire, on connaît notamment, en Europe, le standard GSM ("Groupe spécial Systèmes Mobiles publics de radiocommunication fonctionnant dans la bande des 900 Mhz").

Plus précisément, l'invention concerne un procédé de sécurisation de l'utilisation d'un terminal d'un système de radiocommunication cellulaire. Le procédé de l'invention peut notamment, mais non exclusivement, être mis en oeuvre dans un système GSM.

D'une façon générale, un système de radiocommunication cellulaire est mis en oeuvre au sein d'un réseau de cellules géographiques parcouru par des stations mobiles (ou terminaux). Une station de base est associée à chaque cellule, et une station mobile communique par l'intermédiaire de la station de base associée à la cellule dans laquelle elle se trouve.

Par station mobile ou terminal (les deux termes étant utilisés indifféremment dans la présente description), on entend l'équipement physique utilisé par l'usager du réseau pour accéder aux services de télécommunication offerts. Il existe différents types de terminaux, tels que les mobiles montés sur des véhicules, les portables ou encore les portatifs.

Généralement, quand un terminal est utilisé par un usager, celui-ci doit connecter une carte utilisateur qu'il détient, afin que celle-ci procure au terminal son numéro d'abonné. Ainsi, dans le cas du GSM, la carte utilisateur que l'usager doit connecter au terminal est une carte à mémoire amovible, appelée module d'identification d'abonné (ou SIM en anglo-saxon, pour Subscriber Identity Module), qui procure au terminal son numéro international d'abonné (ou IMSI en anglo-saxon, pour International Mobile Subscriber Identity).

En d'autres termes, toutes les informations individuelles concernant l'abonné sont stockées sur la carte utilisateur (ou carte SIM). Chaque terminal peut donc être utilisé, dans le cas général, avec n'importe quelle carte utilisateur.

Afin d'éviter un usage délictueux de l'identité d'un abonné du réseau, un mécanisme d'authentification est défini. En effet, il convient d'éviter qu'à partir de la seule connaissance de l'identité d'un abonné (ou IMS1), un fraudeur puisse se faire passer auprès du réseau pour cet abonné. Pour cela, la carte utilisateur contient également une clé d'authentification individuelle et un algorithme d'authentification. Ainsi, après que l'abonné se soit identifié, le réseau peut contrôler son identité et interrompre la procédure si l'authentification n'est pas réussie.

Par ailleurs, l'abonné peut déclarer la perte ou le vol de sa carte utilisateur auprès de l'opérateur ou du gestionnaire du réseau. De cette façon, toute tentative d'utilisation par un tiers de cette carte utilisateur peut être détectée et interdite au niveau système.

De plus, très souvent, l'opérateur offre un degré de protection supplémentaire de la carte utilisateur. Pour cela, un numéro d'identité personnel (ou PIN en anglo-saxon, pour Personal Identity Number) est stocké sur la carte utilisateur. Ce code PIN est demandé à l'abonné, qui le saisit au clavier de son terminal, à chaque introduction de la carte dans le terminal ou à chaque mise en service de celui-ci. Ainsi, un éventuel fraudeur ne peut utiliser une carte utilisateur perdue ou volée que s'il arrive à connaître le code PIN associé à cette carte utilisateur.

Si dès l'origine des systèmes de radiocommunication cellulaire, divers moyens de protection des cartes utilisateur contre la fraude ont été proposés, comme expliqués ci-dessus, il n'en a pas été de même pour la protection des terminaux. En effet, les terminaux des premières générations ne disposent d'aucune protection particulière contre la fraude. Par conséquent, un terminal perdu ou volé peut être utilisé par n'importe quel possesseur d'une carte utilisateur valide. En effet, le réseau vérifie la validité de la carte utilisateur mais pas celle du terminal. Le terminal peut donc, en termes de protection, être qualifié de passif.

Or, chaque terminal d'un système de radiocommunication cellulaire est un dispositif très coûteux, que ce coût soit supporté par l'abonné ou par l'opérateur. Il y a donc un intérêt évident à tenter de sécuriser son utilisation, notamment en cas de perte ou de vol.

D'une façon générale, la sécurisation de l'utilisation d'un terminal consiste à proposer, en plus du mode normal de fonctionnement, un mode dit verrouillé, dans lequel le terminal ne peut être utilisé qu'avec la carte utilisateur, dite carte utilisateur liée, avec laquelle il a été verrouillé. En d'autres termes, on crée un lien entre le terminal et une carte utilisateur particulière (dite carte utilisateur liée).

Une technique connue de mise en oeuvre d'un tel mode verrouillé est décrite dans le document EP 301 740 au nom de NOKIA MOBILE PHONES LID. Le procédé décrit dans ce brevet comporte une phase de création d'un lien terminal/carte utilisateur et une phase de vérification du lien terminal/carte utilisateur.

Lors de la phase de création du lien, le terminal lit des données d'identification utilisateur stockées sur la carte utilisateur, puis les stocke dans sa mémoire.

Lors de la phase de vérification du lien, le terminal lit les données d'identification utilisateur stockées sur la carte utilisateur avec laquelle il coopère, puis les compare avec celles stockées dans sa mémoire lors de la phase de création du lien, et enfin autorise ou non son fonctionnement selon que les données lues et celles stockées sont identiques ou non.

Cette technique connue permet donc d'éviter qu'un terminal soit utilisé avec une carte utilisateur autre que celle avec laquelle il a été verrouillé. Ainsi, un terminal perdu ou volé sans sa carte utilisateur liée est inutilisable par un éventuel fraudeur. Ceci contribue donc à la réduction du nombre de vols de terminaux.

Il est à noter que même si le terminal est perdu ou volé avec sa carte utilisateur liée, il ne peut être utilisé qu'avec celle-ci. En effet, comme déjà expliqué ci-dessus, l'abonné peut déclarer auprès de son opérateur la perte ou le vol de sa carte utilisateur, afin que l'utilisation de celle-ci soit interdite au niveau système. Le vol du terminal ne présente donc pas non plus d'intérêt dans ce cas.

Cette technique connue de sécurisation de l'utilisation d'un terminal présente néanmoins au moins deux inconvénients majeurs.

Tout d'abord, elle ne permet pas de supprimer complètement tous les risques d'utilisation frauduleuse du terminal. En effet, le lien terminal/carte utilisateur repose sur le stockage dans la mémoire du terminal des données d'identification utilisateur (lues par le terminal sur la carte utilisateur, lors de la phase de création du lien). Or, il est toujours possible qu'un fraudeur modifie directement le contenu du la mémoire du terminal ulin de modifier le lien verrouillant existant. Dans ce cas, il va remplacer, dans la mémoire du terminal, les données d'identification de la carte utilisateur liée par de nouvelles données d'identification d'une autre carte utilisateur. De cette façon, bien qu'il soit en mode verrouillé, le terminal fonctionne (frauduleusement) puisqu'il voit l'autre carte utilisateur comme la carte avec laquelle il est lié.

De plus, cette technique connue est généralement combinée à la protection consistant à demander à l'abonné de rentrer son code PIN lors de chaque introduction de sa carte utilisateur dans le terminal ou à chaque mise en service de celui-ci. Or, cette opération de rentrée du code PIN peut devenir fastidieuse si elle est répétée à de nombreuses reprises au cours d'une même journée. Pour cette raison, certains abonnés laissent leur terminal en marche afin de ne pas avoir à rentrer plusieurs fois le code PIN. Dès lors, même si la mode verrouillé est sélectionné, le vol du terminal, qui est allumé et coopère avec sa carte utilisateur liée, permet à un fraudeur d'accéder aux services du réseau, et ce jusqu'à une interdiction au niveau système après que l'abonné a déclaré la perte ou le vol de sa carte utilisateur. On rappelle ici qu'il n'existe pas, pour l'utilisation des terminaux volés, de moyen d'interdiction au niveau système équivalent à celui existant pour les cartes utilisateurs volées.

L'invention a notamment pour objectif de pallier ces inconvénients de l'état de la technique.

Il est par ailleurs connu du document DE 92 17 379 U, un procédé de sécurisation comportant une phase de création d'un lien terminal/carte utilisateur et une phase de vérification dudit lien. Lors de la phase de création du lien, le terminal lit des données d'identification stockées sur la carte utilisatuer et les stocke dans sa mémoire, éventuellement de façon cryptée.

La présente invention a pour objectif de proposer une solution alternative de création d'un lien terminal/carte utilisateur.

Plus précisément, l'un des objectifs de la présente invention est de fournir un procédé de sécurisation de l'utilisation d'un terminal d'un système de radiocommunication cellulaire, ce procédé permettant de supprimer complètement tous les risques d'utilisation frauduleuse du terminal.

Cet objectif est atteint selon l'invention à l'aide d'un procédé de sécurisation de l'utilisation d'un terminal d'un système de radiocommunication cellulaire, ledit terminal étant du type destiné à coopérer avec une carte utilisateur et pouvant fonctionner selon au moins deux modes de fonctionnement distincts, à savoir un mode normal, dans lequel il peut être utilisé avec n'importe quelle carte utilisateur, et un mode verrouillé, dans lequel il ne peut être utilisé qu'avec la carte utilisateur, dite carte utilisateur liée, avec laquelle il a été verrouillé,
caractérisé en ce qu'on stocke dans une zone mémoire de ladite carte utilisateur liée des premières données de verrouillage, qui sont calculées par une fonction de calcul propre audit terminal;
et en ce que, dans ledit mode verrouillé, le procédé comprend une phase d'authentification par le terminal de la cane utilisateur avec laquelle il coopère, ladite phase d'authentification comprenant notamment les étapes suivantes ;
- on calcule dans ledit terminal, à partir d'une fonction de calcul propre audit terminal et identique à la précédente, et de données intermédiaires lues dans une zone mémoire accessible audit terminal, des secondes données de verrouillage ;
- on compare dans le terminal lesdites premières et secondes données de verrouillage et l'on autorise l'utilisation dudit terminal uniquement en cas d'égalité, c'est-à-dire si la carte utilisateur avec laquelle coopère le terminal est authentifiée comme la carte utilisateur liée.

Ainsi, le principe général de l'invention consiste à établir un lien entre un terminal et une carte utilisateur en stockant des données de verrouillage sur cette carte utilisateur (dite carte utilisateur liée). Ce principe diffère fondamentalement de celui proposé dans le brevet EP 301 740 précité. En effet, le principe connu, s'il consiste également à établir un lien entre le terminal et une carte utilisateur, repose sur le stockage des données de verrouillage dans le terminal (et non pas sur la carte utilisateur liée).

De cette façon, le procédé de l'invention permet un fonctionnement en mode verrouillé, dans lequel l'utilisation du terminal n'est possible qu'avec la carte utilisateur liée.

De plus, il permet de supprimer complètement tous les risques d'utilisation frauduleuse du terminal. Il ne présente donc pas la vulnérabilité du procédé connu. En effet, le lien terminal/carte utilisateur est dépendant d'une part des premières données stockées sur la carte utilisateur liée et d'autre part d'une fonction de calcul propre au terminal. Or, un fraudeur ne peut en aucun cas connaître cette fonction de calcul qui n'est pas accessible en lecture, De plus, à moins que la cane utilisateur liée ait été volée avec le terminal, il ne connaît pas non plus les premières données stockées. Par conséquent, il ne peut pas transformer une carte utilisateur en sa possession afin que celle-ci soit vue par le terminal comme la carte utilisateur avec laquelle il est lié.

D'autres objectifs sont atteints selon le procédé de l'invention tel que précisé dans les revendications dépendantes.

Un objectif complémentaire est de fournir un tel procédé qui permette, localement ou à distance, le blocage (interdiction totale de fonctionnement) ou le déblocage (autorisation du fonctionnement en mode verrouillé) d'un terminal.

Un autre objectif est de fournir un tel procédé qui permette à un abonné disposant de plusieurs terminaux pour un même abonnement de disposer en permanence d'au moins un terminal permettant d'assurer différentes fonctions de "réception passive" (fonctionnement du type répondeur), telles que la mémorisation des appels reçus.

Il est clair que, de façon connue, si la carte utilisateur liée a été volée avec le terminal, l'abonné peut prévenir l'opérateur ou le gestionnaire du réseau afin que l'utilisation de sa carte utilisateur soit interdite au niveau système.

Par ailleurs, le procédé de l'invention offre un fonctionnement en mode verrouillé suffisamment sécurisé pour ne pas exiger de l'utilisateur qu'il rentre son code PIN lors de chaque introduction de sa carte utilisateur dans le terminal ou à chaque mise en service de celui-ci.

Avantageusement, ladite phase d'authentification est effectuée notamment :
- lors de chaque mise en marche du terminal ; et/ou
- lors de chaque changement de carte utilisateur coopérant avec le terminal.

La phase d'authentification peut également, de façon avantageuse, être répétée selon une stratégie prédéterminée, c'est-à-dire par exemple à intervalles de temps prédéterminés (réguliers ou non).

Préférentiellement, ladite fonction de calcul propre au terminal est une fonction de cryptage selon un algorithme prédéterminé, et lesdites premières et secondes données de verrouillage sont des données cryptées avec ladite fonction de cryptage.

De cette façon, le degré de sécurisation de l'utilisation du terminal est encore augmenté.

Dans un premier mode de réalisation préférentiel de l'invention, l'étape de stockage des premières données de verrouillage dans une zone mémoire de la carte utilisateur liée est effectuée lors d'une personnalisation préalable de ladite carte utilisateur liée.

Cette personnalisation préalable est par exemple effectuée lors de la fabrication de la carte utilisateur, lors de la mise en service de la carte utilisateur (par le constructeur, l'opérateur, ou le distributeur), ou encore lors de la composition d'un ensemble personnalisé comprenant le terminal et sa carte utilisateur. En d'autres termes, la carte utilisateur est personnalisée en usine ou par un distributeur. Pour ce qui est de son fonctionnement dans le mode verrouillé, la carte utilisateur est donc liée dès sa personnalisation à un terminal particulier, à savoir celui dont la fonction de calcul propre permet, partir de données intermédiaires, de calculer des secondes données de verrouillage identiques aux premières données de verrouillage stockées sur la carte utilisateur liée. En d'autres termes, la carte utilisateur ne peut être verrouillé qu'avec ce terminal particulier.

Dans un second mode de réalisation préférentiel de l'invention, l'étape de stockage des premières données de verrouillage dans une zone mémoire de la carte utilisateur liée est effectuée lors de chaque passage du mode normal au mode verrouillé, de nouvelles premières données à stocker étant calculées dans le terminal, à partir de ladite fonction de calcul propre audit terminal et desdites données intermédiaires.

Dans ce cas, la carte utilisateur n'est pas préalablement liée à un terminal et peut donc être verrouillée avec n'importe quel terminal. En effet, c'est uniquement lorsque l'on passe du mode normal au mode verrouillé que le lien est créé avec le terminal (qui est donc celui avec lequel la carte utilisateur coopère).

Avantageusement, lors de chaque passage du mode verrouillé au mode normal, on modifie au moins partiellement le contenu de la zone mémoire de la carte utilisateur précédemment liée dans laquelle sont stockées les premières données de verrouillage, de façon à supprimer le lien d'authentification entre le terminal et la carte utilisateur précédemment liée.

Ainsi, on est sûr avant le prochain passage en mode verrouillé qu'aucune carte utilisateur n'est liée au terminal. En d'autres termes, en mode normal, aucune carte utilisateur, même celle qui était auparavant verrouillée avec le terminal, ne conserve dans sa mémoire une trace d'un lien antérieur avec le terminal.

De façon avantageuse, dans ledit mode verrouillé, le terminal peut être utilisé avec au moins une autre carte utilisateur, dite autre carte utilisateur liée, pendant une session multi-utilisateur débutant après qu'un code multi-utilisateur a été transmis au terminal, et se terminant soit lorsque ladite autre carte utilisateur liée ne coopère plus avec le terminal, soit lorsque le terminal est arrêté puis remis en marche.

Dans ce cas, le terminal fonctionne dans le mode verrouillé avec l'une ou l'autre de deux cartes utilisateurs liées. Lorsque la session multi-utilisateur permettant l'utilisation d'une seconde carte utilisateur liée se termine, on revient au lien entre le terminal et la première carte utilisateur liée. La carte utilisateur liée avec laquelle coopère le terminal peut donc être remplacée par une autre carte utilisateur, sans que cela nécessite le passage par le mode normal. Par conséquent, la sécurisation de l'utilisation du terminal reste totale, même s'il y a deux - et non plus une seule - cartes utilisateur liées.

Préférentiellement, lesdites données intermédiaires sont stockées dans une zone mémoire du terminal.

Selon une première variante préférentielle, lesdites données intermédiaires sont stockées dans une zone mémoire de la carte utilisateur avec laquelle coopère le terminal.

Selon une seconde variante préférentielle qui combine les deux solutions précédentes, lesdites données intermédiaires sont stockées, pour une partie, dans une zone mémoire du terminal et, pour l'autre partie, dans une zone mémoire de la carte utilisateur avec laquelle coopère le terminal.

De façon avantageuse, l'étape de stockage des données intermédiaires est effectuée :
- lors de la fabrication du terminal, pour les données intermédiaires qui sont stockées dans une zone mémoire du terminal, et
- lors de la fabrication de la carte utilisateur, pour les données intermédiaires qui sont stockées dans dans une zone mémoire de la carte utilisateur.

Préférentiellement, le passage par le terminal du mode normal au mode verrouillé nécessite la transmission au terminal d'un code de verrouillage/déverrouillage prédéterminé, et le passage par le terminal du mode verrouillé au mode normal nécessite la transmission au terminal dudit code de déverrouillage/déverrouillage.

De cette façon, la sécurisation de l'utilisation du terminal est encore augmentée.

Avantageusement, ledit code de verrouillage/déverrouillage est rentré par un utilisateur du terminal sur un clavier relié au terminal.

Dans un mode de réalisation avantageux de l'invention, dans ledit mode verrouillé, le procédé comprend également :
- une étape de blocage du terminal, au cours de laquelle on modifie au moins partiellement le contenu de la zone mémoire de la carte utilisateur liée dans laquelle sont stockées lesdites premières données de verrouillage, de façon à rendre le terminal inutilisable même si la carte utilisateur avec laquelle il coopère est la carte utilisateur liée, et
- une étape de déblocage du terminal, au cours de laquelle on réécrit lesdites premières données de verrouillage dans la zone mémoire de la carte utilisateur liée, de façon à rendre le terminal à nouveau utilisable si la carte utilisateur avec laquelle il coopère est la carte utilisateur liée.

Ainsi, lorsqu'il est en mode verrouillé, le terminal peut être rendu inutilisable (blocage complet empêchant une utilisation frauduleuse) sans pour cela être éteint. Dans cet état "allumé mais bloqué", le terminal peut assurer différentes fonctions de "réception passive" (fonctionnement du type répondeur), telles que la mémorisation des appels reçus.

Préférentiellement, ladite étape de blocage est effectuée lorsqu'une commande de blocage est transmise au terminal, et ladite étape de déblocage est effectuée lorsqu'une commande de déblocage est transmise au terminal.

Ainsi, le procédé de l'invention permet, localement ou à distance, le blocage (interdiction totale de fonctionnement) ou le déblocage (autorisation du fonctionnement en mode verrouillé) du terminal.

Avantageusement, lesdites commande de blocage et de déblocage ne sont prises en compte par le terminal que si elles sont accompagnées d'un code de blocage/déblocage prédéterminé.

Ceci permet d'augmenter encore la sécurisation de l'utilisation du terminal.

Préférentiellement, lesdites commande de blocage et de déblocage sont transmises au terminal par l'intermédiaire d'un Service de Messages Courts.

Selon une variante préférentielle, lesdites commande de blocage et de déblocage sont transmises au terminal par l'intermédiaire d'un Service de Transmission de Données.

Dans un mode de réalisation préférentiel de l'invention, lesdites commande de blocage et de déblocage sont transmises audit terminal, dit premier terminal, depuis un autre terminal, dit second terminal,
et la carte utilisateur avec laquelle coopère ledit second terminal et la carte utilisateur avec laquelle coopère ledit premier terminal correspondent à un même abonnement.

Ainsi, le procédé de l'invention permet à un abonné disposant de plusieurs terminaux pour un même abonnement de disposer en permanence d'au moins un terminal permettant d'assurer un fonctionnement du type répondeur (par exemple afin de mémoriser des appels reçus).

L'invention concerne également un terminal permettant la mise en oeuvre du procédé tel que présenté ci-dessus.

Le terminal de l'invention comprend des moyens de sécurisation de son utilisation comprenant notamment :
- une fonction de calcul (A) propre audit terminal (T) ;
- des moyens de stockage dans une zone mémoire de ladite carte utilisateur liée de premières données de verrouillage qui sont calculées par ladite fonction de calcul ;
- des premiers moyens de lecture dans ladite zone mémoire de la carte utilisateur liée, desdites premières données de verrouillage ;
- des seconds moyens de lecture dans une zone mémoire accessible audit terminal, de données intermédiaires ;
- des moyens de calcul, à partir de ladite fonction de calcul et desdites données intermédiaires, de secondes données de verrouillage ;
- des moyens de comparaison desdites premières et secondes données de verrouillage ; et
- des moyens d'autorisation sélective permettant l'utilisation dudit terminal uniquement en cas d'égalité, c'est-à-dire si la carte utilisateur avec laquelle coopère le terminal est authentifiée comme la carte utilisateur liée,
lesdits moyens de sécurisation étant utilisés, dans ledit mode verrouillé, lors d'une phase d'authentification par le terminal de la carte utilisateur avec laquelle il coopère.

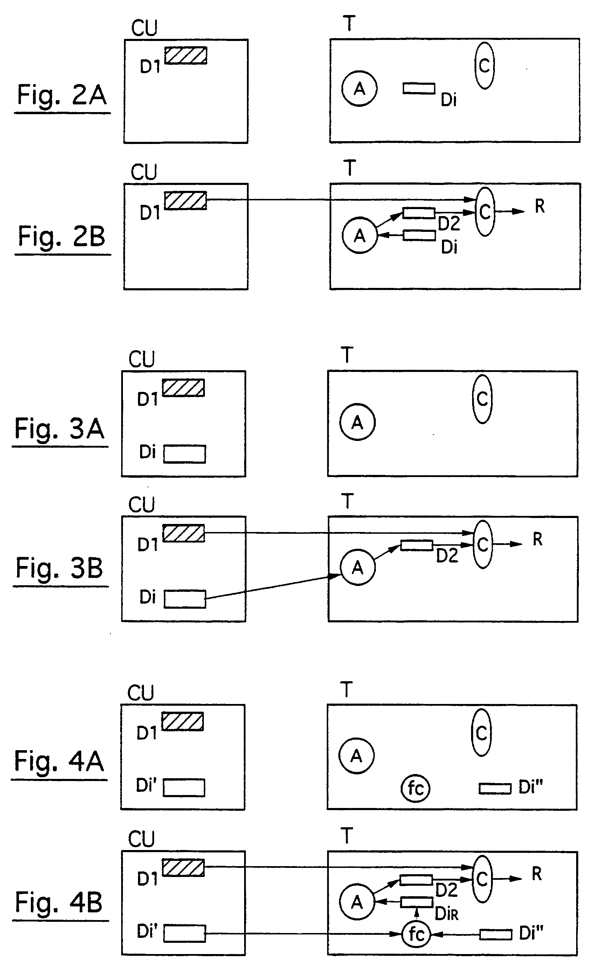

D'autres caractéristiques et avantages de l'invention apparaîtront à la lecture de la description suivante de plusieurs modes de réalisution préférentiels de l'invention, donnés à titre d'exemples indicatifs et non limitatifs, et des dessins annexés, dans lesquels :

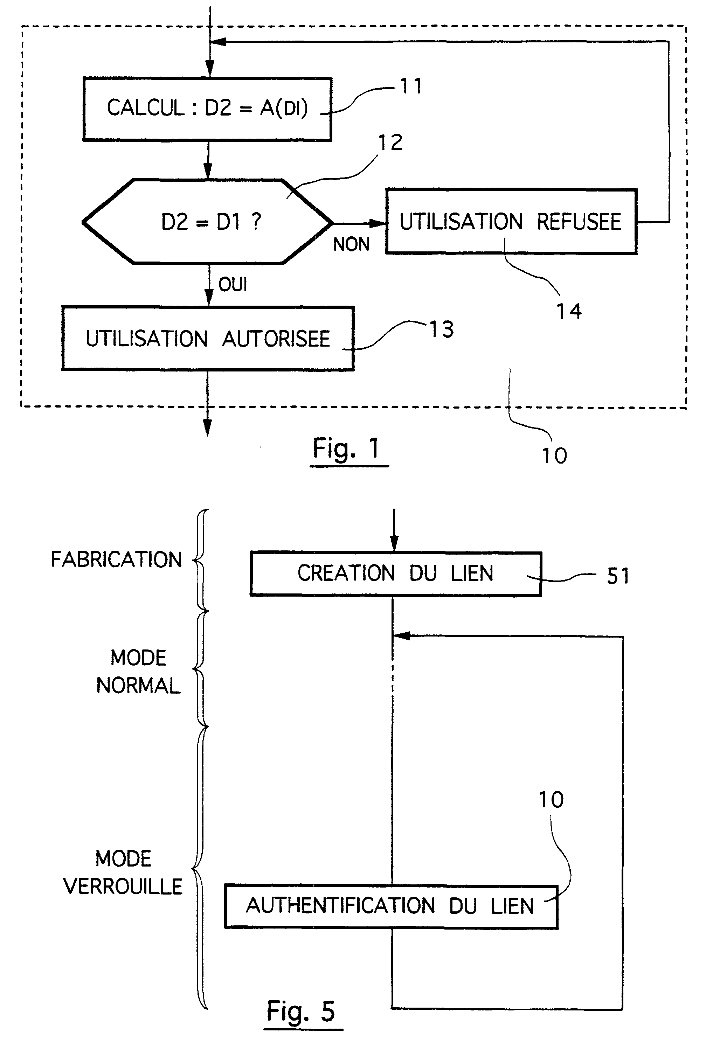

- la figure 1 permet d'expliquer le principe général du procédé selon l'invention en présentant un organigramme simplifié de la phase d'authentification du lien terminal/carte utilisateur ;
- chacun des trois couples de figures (2A, 2B), (3A, 3B) et (4A, 4B) présente une technique de mise en oeuvre distincte de la phase d'authentification de la figure 1, avec pour chaque couple un mode de réalisation distinct du stockage des données intermédiaires, chaque couple comprenant :
   * une première figure 2A, 3A et 4A présentant de façon schématique la répartition entre le terminal et la carte utilisateur d'éléments permettant la mise en oeuvre du procédé de l'invention,
   * une seconde figure 2B, 3B et 4B schématisant le déroulement de la phase d'authentification de la carte utilisateur par le terminal ;
- la figure 5 présente un organigramme simplifié d'un premier mode de réalisation du procédé selon l'invention ;
- la figure 6 présente un organigramme simplifié d'un second mode de réalisation du procédé selon l'invention ;
- la figure 7 présente de façon plus détaillée la phase de création du lien apparaissant sur la figure 6 ;
- la figure 8 présente de façon plus détaillée la phase de blocage du terminal apparaissant sur la figure 6 ;
- la figure 9 présente de façon plus détaillée la phase de déblocage du terminal apparaissant sur la figure 6 ; et
- la figure 10 présente de façon schématique un mode de réalisation particulier du procédé de l'invention mis en oeuvre entre deux terminaux ;
- la figure 11 présente un schéma simplifié d'un mode de réalisation particulier d'un terminal et d'une carte utilisateur selon l'invention.

L'invention concerne donc un procédé de sécurisation de l'utilisation d'un terminal d'un système de radiocommunication cellulaire. Ce terminal est du type destiné à coopérer avec une carte utilisateur et pouvant fonctionner selon au moins deux modes de fonctionnement distincts, à savoir un mode normal, dans lequel il peut être utilisé avec n'importe quelle carte utilisateur, et un mode verrouillé, dans lequel il ne peut être utilisé qu'avec la carte utilisateur, dite carte utilisateur liée, avec laquelle il a été verrouillé.

Il convient donc d'une part de créer un lien entre le terminal et la carte utilisateur, et d'autre part d'authentifier ce lien terminal/carte utilisateur afin d'empêcher, dans le mode verrouillé, l'utilisation d'une carte utilisateur autre que la carte utilisateur liée.

La phase de création du lien consiste, selon l'invention, à stocker dans une zone mémoire de la carte utilisateur liée des premières données de verrouillage. Comme expliqué plus en détails dans la suite de la description, cette phase de création peut être effectuée soit lors de la fabrication de la carte utilisateur, soit lors de chaque passage du mode normal au mode verrouillé.

Dans le mode verrouillé, la phase d'authentification du lien consiste en une vérification par le terminal de la carte utilisateur avec laquelle il coopère. Selon l'invention, et comme présenté sur l'organigramme simplifié de la figure 1, cette phase d'authentification 10 comprend notamment les étapes suivantes :
- on calcule (11) dans le terminal, à partir d'une fonction de calcul A propre au terminal et de données intermédiaires DI lues dans une zone mémoire accessible au terminal, des secondes données de verrouillage D2 ;
- on compare (12) dans le terminal les premières D1 et secondes D2 données de verrouillage, et
- on autorise (13) l'utilisation du terminal uniquement en cas d'égalité, c'est-à-dire si la carte utilisateur avec laquelle coopère le terminal est authentifiée comme la carte utilisateur liée. Dans le cas contraire, l'utilisation du terminal est refusée (14).

Cette phase d'authentification 10 est par exemple effectuée lors de chaque mise en marche du terminal et lors de chaque changement de carte utilisateur coopérant avec le terminal. Elle peut être également effectuée de façon répétée, selon une stratégie prédéterminée (par exemple à intervalles de temps réguliers au cours du fonctionnement en mode verrouillé).

La fonction de calcul A propre au terminal est par exemple une fonction de cryptage selon un algorithme prédéterminé, de sorte que les premières D1 et secondes D2 données de verrouillage sont des données cryptées avec cette fonction de cryptage A.

Chacun des trois couples de figures (2A, 2B), (3A, 3B) et (4A, 4B) présente une technique de mise en oeuvre distincte de la phase d'authentification 10 de la figure 1.

Pour chaque couple, la première figure 2A, 3A et 4A présente de façon schématique la répartition entre le terminal T et la carte utilisateur CU d'éléments permettant la mise en oeuvre du procédé de l'invention. Ces éléments sont notamment les premières données de verrouillage D1, la fonction de calcul A propre au terminal, une fonction de comparaison C et les données intermédiaires DI. Du fait du principe même de l'invention, les premières données de verrouillage D1 sont toujours stockées sur la carte utilisateur liée CU. Par ailleurs, par définition, la fonction de calcul A propre au terminal ainsi que la fonction de comparaison C sont stockées sur le terminal T. En revanche, selon la technique retenue, les données intermédiaires DI peuvent être stockées sur le terminal (cf fig.2A et 2B), sur la carte utilisateur CU (cf fig.3A et 3B), ou encore réparties entre le terminal T et la carte utilisateur CU (cf fig.4A et 4B).

La seconde figure 2B, 3B et 4B schématise le déroulement de la phase d'authentification de la carte utilisateur CU par le terminal T.

Selon une première technique (cf fig.2A et 2B), les données intermédiaires DI sont stockées dans une zone mémoire du terminal T. Le déroulement de la phase d'authentification du lien est le suivant (cf fig.2B) : le terminal lit sur la carte utilisateur les premières données de verrouillage D1 et les compare (C) à des secondes données de verrouillage D2 qu'il a calculées à partir de la fonction de calcul A et des données intermédiaires DI qu'il stocke. Le résultat R de cette comparaison permet d'autoriser ou non l'utilisation du terminal T.

Selon une seconde technique (cf fig.3A et 3B), les données intermédiaires DI sont stockées dans une zone mémoire de la carte utilisatcur CU avec laquelle coopère le terminal T. Le déroulement de la phase d'authentification du lien (cf fig.3B) est identique à celui de la première technique excepté le fait que le terminal T lit les données intermédiaires DI sur la carte utilisateur CU.

Selon une troisième technique (cf fig.4A et 4B), les données intermédiaires DI sont stockées, pour une partie DI', dans une zone mémoire du terminal T et, pour l'autre partie DI", dans une zone mémoire de la carte utilisateur CU avec laquelle coopère le terminal. Le déroulement de la phase d'authentification du lien (of fig.4B) est identique à celui de la première technique excepté le fait que le terminal T combine, avec une fonction de combinaison f_{c}, les données intermédiaires DI' stockées sur le terminal et les données intermédiaires DI" stockées sur la carte utilisateur, et utilise le résultat DIᵣ de cette combinaison pour calculer, avec la fonction de calcul A, les secondes données de verrouillage D2.

On notera que plusieurs terminaux peuvent avoir une même fonction de cryptage. Dans ce cas, la phase d'authentification 10 est préférentiellement mise en oeuvre avec la première ou la troisième technique précitée. Ainsi, grâce aux données intermédiaires DI, DI' qui sont stockées dans une zone mémoire du terminal mais qui sont distinctes d'un terminal à l'autre, on évite que des premières données de verrouillage identiques soient stockées dans les cartes utilisateur liées avec les différents terminaux qui possèdent une même fonction de cryptage.

Les données intermédiaires DI, DI', DI" sont par exemple stockées lors de la fabrication du matériel (terminal ou carte utilisateur selon les cas) qui les stocke.

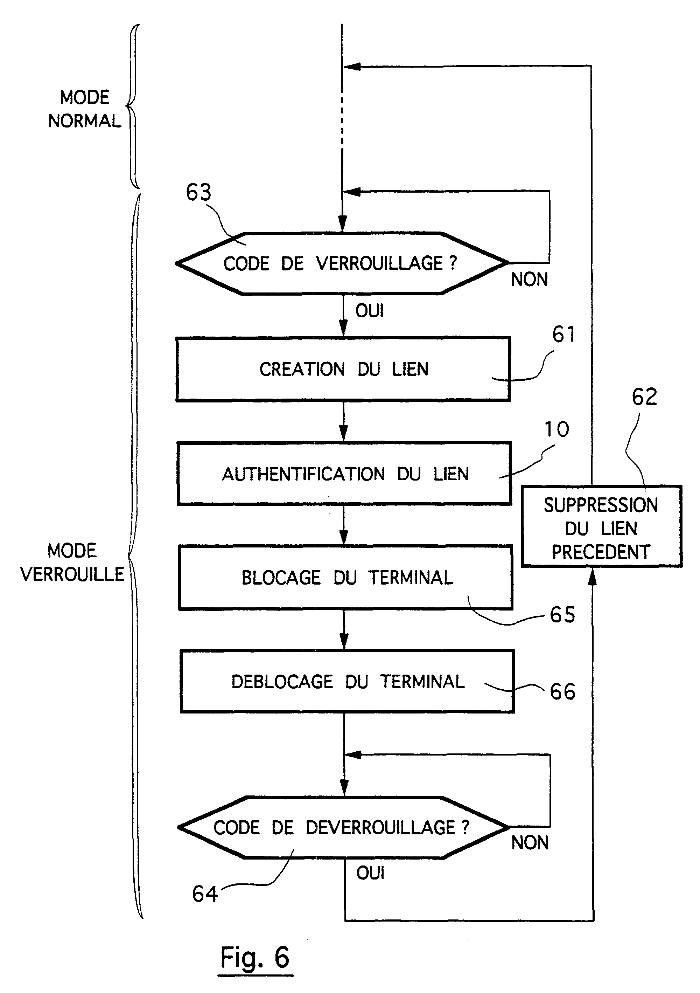

La figure 5 présente un organigramme simplifié d'un premier mode de réalisation du procédé selon l'invention. L'étape 51 de création du lien terminal/carte utilisateur, c'est-à-dire l'étape lors de laquelle on stocke les premières données de verrouillage D1 dans une zone mémoire de la carte utilisateur liée, est effectuée à titre définitif lors de la personnalisation de la carte utilisateur liée (par exemple lors de sa fabrication). Pendant le fonctionnement en mode verrouillé, la phase 10 d'authentification du lien est effectuée aussi souvent que nécessaire. Enfin, il est possible de passer du mode normal au mode verrouillé et vice versa.

La figure 6 présente un organigramme simplifié d'un second mode de réalisation du procédé selon l'invention. La phase 61 de création du lien est effectuée lors de chaque passage du mode normal au mode verrouillé.

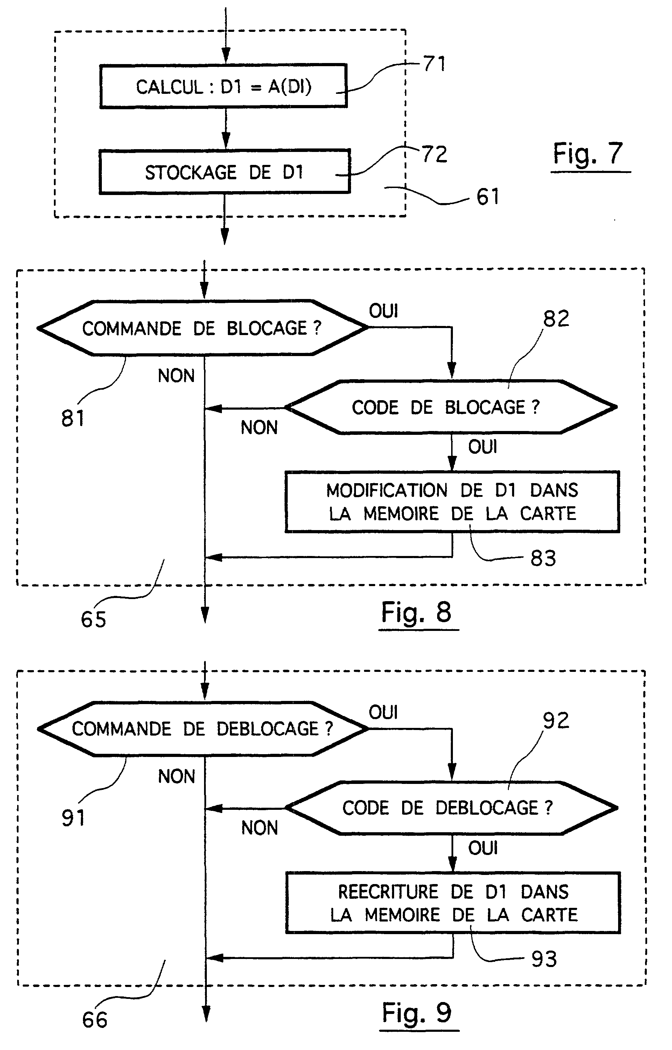

La figure 7 présente de façon plus détaillée cette phase 61 de création du lien, qui comprend les étapes suivantes :
- on calcule (71), dans le terminal, de nouvelles premières données D1, à partir de la fonction de calcul A propre au terminal et des données intermédiaires DI ;
- on stocke (72) ces nouvelles premières données de verrouillage D1 dans une zone mémoire de la carte utilisateur liée.

On peut également prévoir une étape 62, effectuée lors de chaque passage du mode verrouillé au mode normal, de suppression du lien précédent terminal/carte utilisateur liée. Pour cela, on modifie au moins partiellement le contenu de la zone mémoire de la carte utilisateur précédemment liée dans laquelle sont stockées les premières données de verrouillage.

A titre d'option, on peut également prévoir que, tout en restant dans le mode verrouillé avec une première carte utilisateur liée, le terminal puisse être utilisé avec au moins une seconde carte utilisateur liée, pendant une session multi-utilisateur. Cette session, lors de laquelle on utilise la seconde carte utilisateur liée, débute par la fourniture au terminal d'un code multi-utilisateur et se termine soit lorsque la seconde carte utilisateur liée ne coopère plus avec le terminal, soit lorsque le terminal est arrêté puis remis en marche. A la fin de la session, on revient au mode verrouillé avec le lien entre le terminal et la première carte utilisateur liée.

On présente maintenant, en relation avec le second mode de réalisation du procédé de l'invention présenté sur la figure 6, diverses étapes supplémentaires que peut comprendre le procédé de l'invention. On notera que ces étapes supplémentaires peuvent également être ajoutées au premier mode de réalisation du procédé de l'invention tel que présenté sur la figure 5.

Ainsi, on peut imposer (étapes référencées 63 et 64) la fourniture d'un code de verrouillage/déverrouillage prédéterminé pour le passage par le terminal du mode normal au mode verrouillé, ainsi que pour le passage inverse. Ce code de verrouillage/déverrouillage est par exemple rentré par l'abonné sur un clavier relié à son terminal (ou intégré à celui-ci).

Le procédé peut également comprendre, en mode verrouillé, une étape 65 de blocage du terminal et une étape 66 de déblocage du terminal.

La figure 8 présente de façon plus détaillée cette phase de blocage du terminal, qui comprend notamment une étape 83 de modification, au moins partielle, du contenu de la zone mémoire de la carte utilisateur liée dans laquelle sont stockées les premières données de verrouillage D1. Ceci permet de rendre le terminal inutilisable même si la carte utilisateur avec laquelle il coopère est la carte utilisateur liée. Il est important de noter que dans cet état bloqué, le terminal reste allumé et peut donc remplir des fonctions du type répondeur (par exemple, mémoriser, lors d'un appel, le numéro de l'appelant et/ou un message laissé par celui-ci).

L'accomplissement de l'étape 65 de blocage peut être conditionnée par la double condition suivante (81) une commande de blocage doit être transmise au terminal, (82) cette commande de blocage doit être accompagnée d'un code de blocage/déblocage prédéterminé.

La figure 9 présente de façon plus détaillée la phase de déblocage du terminal, qui comprend notamment une étape 93 de réécriture des premières données de verrouillage D1 dans la zone mémoire de la carte utilisateur liée. Ceci permet de rendre le terminal à nouveau utilisable, à la condition bien sûr que la carte utilisateur avec laquelle il coopère soit la carte utilisateur liée.

L'accomplissement de l'étape 66 de déblocage peut être conditionnée par la double condition suivante : (91) une commande de déblocage doit être transmise au terminal, (92) cette commande de déblocage doit être accompagnée d'un code de blocage/déblocage prédéterminé.

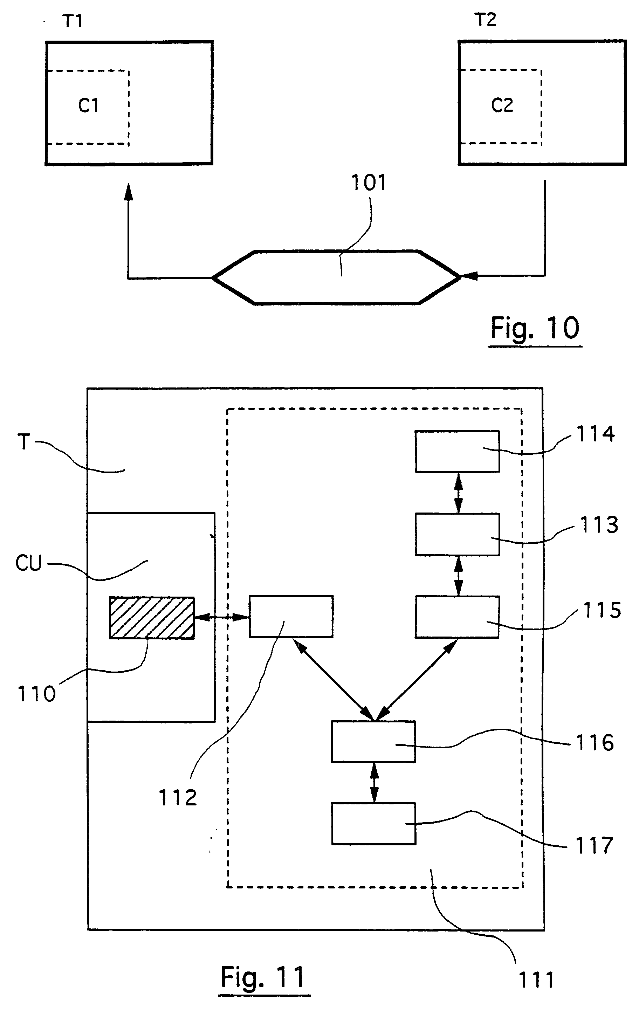

Comme présenté sur la figure 10, les commandes de blocage et de déblocage sont par exemple transmises au terminal (dit premier terminal T1), depuis un autre terminal (dit second terminal T2), par l'intermédiaire (101) soit d'un Service de Messages Courts, soit d'un Service de Transmission de Données. Ces deux services sont mis en oeuvre selon des techniques décrites dans les recommandations GSM séries 2, 3, 4 et 7. Dans les deux cas, le réseau doit comporter, au niveau système, des moyens de routage de telles commandes de blocage et de déblocage.

Ainsi, un usager disposant pour un même abonnement de deux cartes utilisateur distinctes C1, C2 (coopérant chacune avec un terminal distinct T1, T2) peut disposer en permanence d'au moins un terminal permettant d'assurer différentes fonctions de "réception passive" (fonctionnement du type répondeur).

On présente maintenant un exemple d'utilisation du procédé selon l'invention dans le cas où le premier terminal T1 est un terminal mobile monté sur un véhicule et où le second terminal T2 est un terminal portatif.

Pendant une période prédéterminée, par exemple au cours d'un rendez-vous important, un usager peut désirer ne recevoir aucun appel sur son terminal portatif, afin de ne pas être dérangé. Néanmoins, cet usager aimerait savoir ultérieurement si on a essayé de l'appeler pendant cette période de temps. Cette possibilité lui est offerte, grâce au procédé de l'invention, s'il effectue les opérations suivantes :
- il laisse son terminal mobile en marche ;
- il positionne son terminal mobile en mode verrouillé ;
- depuis son terminal portatif, il envoie (par Service de Messages Courts ou Service de Transmission de Données) une commande de blocage à destination de son terminal mobile ;
- il éteint son terminal portatif.

Ainsi, son terminal mobile peut se comporter comme un répondeur, tout en étant bloqué (c'est-à-dire inutilisable) puisque la carte utilisateur ne contient plus les bonnes premières données de verrouillage D1.

Ultérieurement (par exemple lorsque son rendez-vous est terminé), l'usager effectue les opérations suivantes :
- il met en marche son terminal portatif ;
- depuis son terminal portatif, il envoie une commande de déblocage à destination de son terminal mobile.

Ainsi, il peut utiliser normalement son terminal mobile, notamment pour lire les messages enregistrés ou les numéros des appelants mémorisés pendant le fonctionnement en tant que répondeur du terminal mobile.

L'invention concerne également un terminal et une carte utilisateur permettant la mise en oeuvre du procédé tel que présenté ci-dessus. La figure 11 présente un schéma simplifié d'un mode de réalisation de ce terminal et de cette carte utilisateur.

La carte utilisateur CU comporte une zone mémoire 110 destinée à recevoir des premières données de verrouillage D1. Le terminal T comprend des moyens 111 de sécurisation de son utilisation comprenant notamment :
- des premiers moyens 112 de lecture, dans la zone mémoire 110 de la carte utilisateur CU liée, des premières données de verrouillage D1 ;
- des seconds moyens 113 de lecture, dans une zone mémoire 114 accessible au terminal, de données intermédiaires DI ;
- des moyens 115 de calcul, à partir d'une fonction de calcul A propre au terminal et des données intermédiaires DI lues, de secondes données de verrouillage D2 ;
- des moyens 116 de comparaison des premières et secondes données de verrouillage D1, D2 ; et
- des moyens 117 d'autorisation sélective permettant l'utilisation du terminal uniquement en cas d'égalité, c'est-à-dire si la carte utilisateur avec laquelle coopère le terminal est authentifiée comme la carte utilisateur liée.

Ces moyens 111 de sécurisation sont utilisés, dans le mode verrouillé, lors de la phase d'authentification 10 par le terminal T de la carte utilisateur CU avec laquelle il coopère (cf fig.1).

Dans le mode de réalisation présenté sur la figure 11, les données intermédiaires DI sont stockées dans une zone mémoire 114 du terminal. La technique de mise en oeuvre de la phase d'authentification 1 est alors la première décrite ci-dessus, en relation avec les figures 2A et 2B.

Il est clair que l'invention n'est pas limitée à ce mode de réalisation particulier mais concerne également le cas où les données intermédiaires sont stockées dans une zone mémoire de la carte utilisateur, ou encore celui le cas les données intermédiaires sont réparties entre le terminal et la carte utilisateur.

## Revendications

1. Procédé de sécurisation de l'utilisation d'un terminal (T) d'un système de radiocommunication cellulaire, ledit terminal étant du type destiné à coopérer avec une carte utilisateur (CU) et pouvant fonctionner selon au moins deux modes de fonctionnement distincts, à savoir un mode normal, dans lequel il peut être utilisé avec n'importe quelle carte utilisateur, et un mode verrouillé, dans lequel il ne peut être utilisé qu'avec la carte utilisateur, dite carte utilisateur liée, avec laquelle il a été verrouillé,
**caractérisé en ce qu'**on stocke dans une zone mémoire de ladite carte utilisateur (CU) liée des premières données de verrouillage (D1), qui sont calculées par une fonction de calcul (A) propre audit terminal ;
et **en ce que**, dans ledit mode verrouillé, le procédé comprend une phase d'authentification (10) par le terminal (T) de la carte utilisateur (CU) avec laquelle il coopère, ladite phase d'authentification comprenant notamment les étapes suivantes :
- on calcule (11) dans ledit terminal, à partir d'une fonction de calcul (A) propre audit terminal et identique à la précédente, et de données intermédiaires (DI) lues dans une zone mémoire accessible audit terminal, des secondes données de verrouillage (D2);
- on compare (12) dans le terminal lesdites premières et secondes données de verrouillage (D1, D2) et l'on autorise (13) l'utilisation dudit terminal uniquement en cas d'égalité, c'est-à-dire si la carte utilisateur avec laquelle coopère le terminal est authentifiée comme la carte utilisateur liée.

2. Procédé selon la revendication 1, **caractérisé en ce que** ladite phase d'authentification (10) est effectuée notamment :
- lors de chaque mise en marche du terminal ; et/ou
- lors de chaque changement de carte utilisateur coopérant avec le terminal.

3. Procédé selon l'une quelconque des revendications 1 et 2, **caractérisé en ce que** ladite fonction de calcul (A) propre au terminal est une fonction de cryptage selon un algorithme prédéterminé,
et **en ce que** lesdites premières et secondes données de verrouillage (D1, D2) sont des données cryptées avec ladite fonction de cryptage.

4. Procédé selon l'une quelconque des revendications 1 à 3, **caractérisé en ce que** l'étape (51) de stockage des premières données de verrouillage (D1) dans une zone mémoire de la carte utilisateur liée est effectuée lors d'une personnalisation préalable de ladite carte utilisateur liée.

5. Procédé selon l'une quelconque des revendications 1 à 3, **caractérisé en ce que** l'étape (61) de stockage des premières données de verrouillage (D1) dans une zone mémoire de la carte utilisateur liée est effectuée lors de chaque passage du mode normal au mode verrouillé, de nouvelles premières données à stocker (D1) étant calculées dans le terminal, à partir de ladite fonction de calcul (A) propre audit terminal et desdites données intermédiaires (DI).

6. Procédé selon la revendication 5, **caractérisé en ce que**, lors de chaque passage du mode verrouillé au mode normal, on modifie (62) au moins partiellement le contenu de la zone mémoire de la carte utilisateur précédemment liée dans laquelle sont stockées les premières données de verrouillage (D1), de façon à supprimer le lien d'authentification entre le terminal et la carte utilisateur précédemment liée.

7. Procédé selon l'une quelconque des revendications 5 et 6, **caractérisé en ce que**, dans ledit mode verrouillé, le terminal peut être utilisé avec au moins une autre carte utilisateur, dite autre carte utilisateur liée, pendant une session multi-utilisateur débutant après qu'un code multi-utilisateur a été transmis au terminal, et se terminant soit lorsque ladite autre carte utilisateur liée ne coopère plus avec le terminal, soit lorsque le terminal est arrêté puis remis en marche.

8. Procédé selon l'une quelconque des revendications 1 à 7, **caractérisé en ce que** lesdites données intermédiaires (D1) sont stockées dans une zone mémoire du terminal.

9. Procédé selon l'une quelconque des revendications 1 à 7, **caractérisé en ce que** lesdites données intermédiaires (D1) sont stockées dans une zone mémoire de la carte utilisateur avec laquelle coopère le terminal.

10. Procédé selon l'une quelconque des revendications 1 à 7, **caractérisé en ce que** lesdites données intermédiaires sont stockées, pour une partie (DI'), dans une zone mémoire du terminal et, pour l'autre partie (DI''), dans une zone mémoire de la carte utilisateur avec laquelle coopère le terminal.

11. Procédé selon l'une quelconque des revendications 8 à 10, **caractérisé en ce que** l'étape de stockage des données intermédiaires est effectuée :
- lors de la fabrication du terminal, pour les données intermédiaires qui sont stockées dans une zone mémoire du terminal, et
- lors de la fabrication de la carte utilisateur, pour les données intermédiaires qui sont stockées dans dans une zone mémoire de la carte utilisateur.

12. Procédé selon l'une quelconque des revendications 1 à 11, **caractérisé en ce que** le passage par le terminal du mode normal au mode verrouillé nécessite (63) la transmission au terminal d'un code de verrouillage/déverrouillage prédéterminé, et **en ce que** le passage par le terminal du mode verrouillé au mode normal nécessite (64) la transmission au terminal dudit code de déverrouillage/déverrouillage.

13. Procédé selon la revendication 12, **caractérisé en ce que** ledit code de verrouillage/déverrouillage est rentré par un utilisateur du terminal sur un clavier relié au terminal.

14. Procédé selon l'une quelconque des revendications 1 à 13, **caractérisé en ce que**, dans ledit mode verrouillé, le procédé comprend également :
- une étape (65) de blocage du terminal, au cours de laquelle on modifie (83) au moins partiellement le contenu de la zone mémoire de la carte utilisateur liée dans laquelle sont stockées lesdites premières données de verrouillage (D1), de façon rendre le terminal inutilisable même si la carte utilisateur avec laquelle il coopère est la carte utilisateur liée, et
- une étape (66) de déblocage du terminal, au cours de laquelle on réécrit (93) lesdites premières données de verrouillage (D1) dans la zone mémoire de la carte utilisateur liée, de façon à rendre le terminal à nouveau utilisable si la carte utilisateur avec laquelle il coopère est la carte utilisateur liée.

15. Procédé selon la revendication 14, **caractérisé en ce que** ladite étape (65) de blocage est effectuée lorsqu'une commande de blocage est transmise (81 ) au terminal,
et **en ce que** ladite étape (66) de déblocage est effectuée lorsqu'une commande de déblocage est transmise (91) au terminal.

16. Procédé selon la revendication 15, **caractérisé en ce que** lesdites commande de blocage et de déblocage ne sont prises en compte par le terminal que si elles sont accompagnées (82 ; 92) d'un code de blocage/déblocage prédéterminé.

17. Procédé selon l'une quelconque des revendications 15 et 16, **caractérisé en ce que** lesdites commande de blocage et de déblocage sont transmises au terminal par l'intermédiaire d'un Service de Messages Courts.

18. Procédé selon l'une quelconque des revendications 15 et 16, **caractérisé en ce que** lesdites commande de blocage et de déblocage sont transmises au terminal par l'intermédiaire d'un Service de Transmission de Données.

19. Procédé selon l'une quelconque des revendications 15 à 18, **caractérisé en ce que** lesdites commande de blocage et de déblocage sont transmises audit terminal, dit premier terminal (T1), depuis un autre terminal, dit second terminal (T2), et **en ce que** la carte utilisateur (C2) avec laquelle coopère ledit second terminal (T2) et la carte utilisateur (C1) avec laquelle coopère ledit premier terminal (T1) correspondent à un même abonnement.

20. Terminal (T) d'un système de radiocommonication cellulaire, ledit terminal étant du type destiné à coopérer avec une carte utilisateur (CU) er pouvant fonctionner selon au moins deux modes de fonctionnement distincts, à savoir un mode normal, dans lequel il peut être utilisé avec n'importe quelle carte utilisateur, et un mode verrouillé, dans lequel il ne peut être utilisé qu'avec la carte utilisateur, dite carte utilisateur liée, avec laquelle il a été verrouillé,
**caractérisé en ce qu'**il comprend des moyens de sécurisation de son utilisation comprenant notamment :
- une fonction de calcul (A) propre audit terminal (T) ;
- des moyens de stockage dans une zone mémoire de ladite carte utilisateur (CU) liée de premières données de verrouillage (D1) qui sont calculées par ladite fonction de calcul (A) ;
- des premiers moyens de lecture dans ladite zone mémoire de la carte utilisateur (CU) liée, desdites premières données de verrouillage (D1) ;
- des seconds moyens de lecture dans une zone mémoire accessible audit terminal, de données intermédiaires (DI) ;
- des moyens de calcul, à partir de ladite fonction de calcul (A) et desdites données intermédiaires (DI), de secondes données de verrouillage (D2) ;
- des moyens de comparaison desdites premières et secondes données de verrouillage (D1, D2) ; et
- des moyens d'autorisation sélective permettant l'utilisation dudit terminal uniquement en cas d'égalité, c'est-à-dire si la carte utilisateur avec laquelle coopère le terminal est authentifiée comme la cane utilisateur liée.
lesdits moyens de sécurisation étant utilisés, dans ledit mode verrouillé, lors d'une phase d'authentification (10) par le terminal (T) de la carte utilisateur (CU) avec laquelle il coopère.

## Patentansprüche

1. Verfahren zur Sicherung der Benutzung eines Endgerätes (T) eines zellularen Funkkommunikationssystems, wobei das Endgerät von dem Typ ist. der vorgesehen ist, um mit einer Anwenderkarte (CU) zusammenzuarbeiten und in wenigstens zwei verschiedenen Betriebsmodi arbeiten kann, nämlich einem normalen Modus, in dem es mit einer beliebigen Anwenderkarte benutzt werden kann, und einem verriegelten Modus, in dem es nur mit derjenigen Anwenderkarte, als verknüpfte Anwenderkarte bezeichnet, benutzt werden kann. mit der es verriegelt worden ist, **dadurch gekennzeichnet, dass** in einer Speicherzone der verknüpften Anwenderkarte (CU) erste Verriegelungsdaten (D1) gespeichert werden, die durch eine für das Endgerät eigentümliche Rechenfunktion (A) berechnet werden;
und dass in dem verriegelten Modus das Verfahren eine Phase der Authentisierung (10), durch das Endgerät (T), der Anwenderkarte (CU), mit der es zusammenarbeitet, umfasst, wobei diese Authentisierungsphase insbesondere die folgenden Schritte umfasst:
- Berechnen (11), in dem Endgerät und ausgehend von einer dem Endgerät eigentümlichen und mit der vorhergehenden identischen Rechenfunktion (A) und von in einer für das Endgerät zugänglichen Speicherzone gelesenen intermediären Daten (DI), von zweiten Verriegelungsdaten (D2);
- Vergleichen (12) der ersten und zweiten Verriegelungsdaten (D1, D2) in dem Endgerät und Zulassen (13) der Benutzung des Endgerätes nur bei Gleichheit. d. h. wenn die Benutzerkarte, mit der das Endgerät zusammenarbeitet, als die verknüpfte Benutzerkarte authentisiert ist.

2. Verfahren nach Anspruch 1, **dadurch gekennzeichnet, dass** die Authentisierungsphase (10) insbesondere durchgeführt wird:
- bei jedem Einschalten des Endgerätes; und/oder
- bei jedem Wechsel der mit dem Endgerät zusammenarbeitenden Anwenderkarte.

3. Verfahren nach einem beliebigen der Ansprüche 1 und 2, **dadurch gekennzeichnet, dass** die für das Endgerät eigentümliche Rechenfunktion (A) eine Verschlüsselungsfunktion nach einem vorgegebenen Algorithmus ist. und dass die ersten und zweiten Verriegelungsdaten (D1, D2) mit der Verschlüsselungsfunktion verschlüsselte Daten sind.

4. Verfahren nach einem beliebigen der Ansprüche 1 bis 3, **dadurch gekennzeichnet, dass** der Schritt (51) des Speicherns der ersten Verriegelungsdaten (D1) in einer Speicherzone der verknüpften Anwenderkarte bei einer vorhergehenden Personalisierung der verknüpften Anwenderkarte durchgeführt wird.

5. Verfahren nach einem der Ansprüche 1 bis 3, **dadurch gekennzeichnet, dass** der Schritt (61) des Speicherns der ersten Verriegelungsdaten (D1) in einer Speicherzone der verknüpften Anwenderkarte bei jedem Übergang vom normalen Modus in den verriegelten Modus durchgeführt wird, wobei neue zu speichernde erste Daten (D1) in dem Endgerät anhand der für das Endgerät eigentümlichen Rechenfunktion (A) und der intermediären Daten (D1) berechnet werden.

6. Verfahren nach Anspruch 5, **dadurch gekennzeichnet, dass** bei jedem Übergang von dem verriegelten Modus in den normalen Modus der Inhalt der Speicherzone der zuvor verknüpften Anwenderkarte, in der die ersten Verriegelungsdaten (D1) gespeichert sind. wenigstens teilweise verändert wird (62), um die Authentisierungsverknüpfung zwischen dem Endgerät und der zuvor verknüpften Anwenderkarte aufzuheben.

7. Verfahren nach einem beliebigen der Ansprüche 5 und 6, **dadurch gekennzeichnet, dass** in dem verriegelten Modus das Endgerät mit wenigstens einer anderen Anwenderkarte, als andere verknüpfte Anwenderkarte bezeichnet, während einer Multi-Anwender-Sitzung benutzt werden kann, die beginnt, nachdem ein Multi-Anwender-Code an das Endgerät übertragen worden ist, und die endet, wenn entweder diese andere verknüpfte Anwenderkarte nicht mehr mit dem Endgerät zusammenarbeitet, oder wenn das Endgerät angehalten und wieder in Gang gesetzt wird.

8. Verfahren nach einem beliebigen der Ansprüche 1 bis 7, **dadurch gekennzeichnet, dass** die intermediären Daten (DI) in einer Speicherzone des Endgerätes gespeichert werden.

9. Verfahren nach einem der Ansprüche 1 bis 7, **dadurch gekennzeichnet, dass** die intermediären Daten (DI) in einer Speicherzone der Anwenderkarte gespeichert werden. mit der das Endgerät zusammenarbeitet.

10. Verfahren nach einem beliebigen der Ansprüche 1 bis 7, **dadurch gekennzeichnet, dass** die intermediären Daten zu einem Teil (DI') in einer Speicherzone des Endgerätes und zu einem anderen Teil (DI") in einer Speicherzone der Anwenderkarte, mit der das Endgerät zusammenarbeitet, gespeichert werden.

11. Verfahren nach einem beliebigen der Ansprüche 8 bis 10. **dadurch gekennzeichnet, dass** der Schritt des Speicherns der intermediären Daten durchgeführt wird:
- bei der Herstellung des Endgerätes, für die intermediären Daten, die in einer Speicherzone des Endgerätes gespeichert werden. und
- bei der Herstellung der Anwenderkarte, für die intermediären Daten. die in einer Speicherzone der Anwenderkarte gespeichert werden.

12. Verfahren nach einem beliebigen der Ansprüche 1 bis 11, **dadurch gekennzeichnet, dass** der Übergang des Endgerätes vom normalen Modus in den verriegelten Modus die Übertragung eines vorgegebenen Verriegelungs-/Entriegelungscodes an das Endgerät erfordert (63),
und dass der Übergang des Endgerätes vom verriegelten in den normalen Modus die Übertragung des Verriegelungs-/Entriegelungscodes an das Endgerät erfordert (64).

13. Verfahren nach Anspruch 12, **dadurch gekennzeichnet, dass** der Verriegelungs/Entriegelungscode von einem Anwender des Endgerätes auf einer mit dem Endgerät verbundenen Tastatur eingegeben wird.

14. Verfahren nach einem beliebigen der Ansprüche 1 bis 13, **dadurch gekennzeichnet, dass** in dem verriegelten Modus das Verfahren ferner umfasst:
- einen Schritt (65) des Blockierens des Endgerätes, in dessen Verlauf der Inhalt der Speicherzone der verknüpften Anwenderkarte, in der die ersten Verriegelungsdaten (D1) gespeichert sind, wenigstens teilweise verändert wird (83), um das Endgerät unbenutzbar zu machen, selbst wenn die Anwenderkarte, mit der es zusammenarbeitet, die verknüpfte Anwenderkarte ist, und
- einen Schritt (66) des Entblockierens des Endgerätes, in dessen Verlauf die ersten Verriegelungsdaten (D1) in einer Speicherzone der verknüpften Anwenderkarte neu geschrieben werden (93), um das Endgerät von neuem benutzbar zu machen, wenn die Anwenderkarte, mit der es zusammenarbeitet, die verknüpfte Anwenderkarte ist.

15. Verfahren nach Anspruch 14, **dadurch gekennzeichnet, dass** der Schritt (65) des Blockierens durchgeführt wird. wenn ein Blockierbefehl an das Endgerät übertragen wird (81), und dass der Schritt (66) des Entblockierens durchgeführt wird, wenn ein Entblockierbefehl an das Endgerät übertragen wird (91).

16. Verfahren nach Anspruch 15, **dadurch gekennzeichnet, dass** die Blockier- und Entblockierbefehle von dem Endgerät nur berücksichtigt werden, wenn sie von einem vorgegebenen Blockier-Entblockiercode begleitet sind (82; 92).

17. Verfahren nach einem beliebigen der Ansprüche 15 und 16, **dadurch gekennzeichnet. dass** die Blockier- und Entblockierbefehle an das Endgerät über einen Kurznachrichtendienst übertragen werden.

18. Verfahren nach einem beliebigen der Ansprüche 15 und 16. **dadurch gekennzeichnet. dass** die Blockier- und Entblockierbefehle an das Endgerät über einen Datenübertragungsdienst übertragen werden.

19. Verfahren nach einem beliebigen der Ansprüche 15 bis 18, **dadurch gekennzeichnet. dass** die Blockier- und Entblockierbefehle an das Endgerät, als erstes Endgerät (T1) bezeichnet, von einem anderen Endgerät, als zweites Endgerät (T2) bezeichnet. übertragen werden, und dass die Anwenderkarte (C2), mit der das zweite Endgerät (T2) zusammenarbeitet, und die Anwenderkarte (C1), mit der das erste Endgerät (T1) zusammenarbeitet, einem gleichen Kundenvertrag entsprechen.

20. Endgerät (T) für ein zellulares Funkkommunikationssystem, von dem Typ. der vorgesehen ist. um mit einer Anwenderkarte (CU) zusammenzuarbeiten und der in der Lage ist, in wenigstens zwei unterschiedlichen Betriebsmodi zu arbeiten, nämlich einem normalen Modus, in dem er mit einer beliebigen Anwenderkarte benutzt werden kann. und einem verriegelten Modus, in dem er nur mit der Anwenderkarte, als verknüpfte Anwenderkarte bezeichnet. benutzt werden kann, mit der er verriegelt worden ist, **dadurch gekennzeichnet, dass** das Endgerät Mittel zur Absicherung seiner Benutzung umfasst, insbesondere:
- eine dem Endgerät (T) eigentümliche Rechenfunktion (A);
- Mittel zum Speichern, in einer Speicherzone der verknüpften Anwenderkarte (CU). von ersten Verriegelungsdaten (D1), die von der Rechenfunktion (A) berechnet werden;
- erste Lesemittel, zum Lesen der ersten Verriegelungsdaten (D1) in der Speicherzone der verknüpften Anwenderkarte (CU);
- zweite Lesemittel zum Lesen von intermediären Daten (DI) in einer dem Endgerät zugänglichen Speicherzone;
- Mittel zum Berechnen. anhand der Rechenfunktion (A) und der intermediären Daten (DI), von zweiten Verriegelungsdaten (D2);
- Mittel zum Vergleichen der ersten und zweiten Verriegelungsdaten (D1, D2); und
- selektive Autorisierungsmittel, die die Benutzung des Endgerätes nur bei Gleichheit gestatten, d. h. wenn die Anwenderkarte, mit der das Endgerät zusammenarbeitet, als die verknüpfte Benutzerkarte authentisiert wird.
wobei die Absicherungsmittel in dem verriegelten Modus bei einer Authentisierungsphase (10) durch das Endgerät (T) der Anwenderkarte (CU), mit der es zusammenarbeitet, eingesetzt werden.

## Claims

1. A method of making the use of a terminal (T) of a cellular mobile radio system more secure, said terminal being of the type adapted to cooperate with a user card (CU) and being able to operate in at least two separate operating modes, namely a normal mode in which it can be used with any user card and a locked mode in which it can be used only with the user card to which it has been locked, constituting the linked user card,
**characterized in that** first locking data (D1) calculated by a calculation function (A) specific to said terminal is stored in a memory area of said linked user card (CU), and **in that**, in said locked mode, the method includes a phase of authentication (10) by the terminal (T) of the user card (CU) with which it is cooperating, said authentication phase including the following steps:
- second locking data (D2) is calculated (11) in said terminal from intermediate data (Di) read in a memory area accessible to said terminal using a calculation function (A) specific to said terminal and identical to the one above, and
- said first and second locking data (D1, D2) is compared (12) in the terminal and use of said terminal is authorized (13) only in the event of equality, that is to say if the user card with which the terminal is cooperating is authenticated as the linked user card.

2. A method according to claim 1 **characterized in that** said authentication phase (10) is executed:
- each time the terminal is switched on, and/or
- each time the user card cooperating with the terminal is changed.

3. A method according to either claim 1 or claim 2 **characterized in that** said calculation function (A) specific to the terminal is an encryption function using a predetermined algorithm
and **in that** said first and second locking data (D1, D2) consists of data encrypted using said encryption function.

4. A method according to any of claims 1 to 3 **characterized in that** the step (51) of storing first locking data (D1) in a memory area of the linked user card is executed during preliminary personalization of said linked user card.

5. A method according to any of claims 1 to 3 **characterized in that** the step (61) of storing first locking data (D1) in a memory area of the linked user card is executed on each change from the normal mode to the locked mode, new first data (D1) to be stored being calculated in the terminal from said intermediate data (Di) using said calculation function (A) specific to said terminal.

6. A method according to claim 5 **characterized in that**, on each change from the locked mode to the normal mode, the content of the memory area of the previously linked user card in which the first locking data (D1) is stored is at least partially modified (62) to eliminate the authentication link between the terminal and the previously linked user card.

7. A method according to either claim 5 or claim 6 **characterized in that**, in said locked mode, the terminal can be used with at least one other user card, constituting another linked user card, during a multi-user session starting after a multi-user code has been transmitted to the terminal and ending either when said other linked user card is no longer cooperating with the terminal or when the terminal is switched off and then switched on again.

8. A method according to any of claims 1 to 7 **characterized in that** said intermediate data (Di) is stored in a memory area of the terminal.

9. A method according to any of claims 1 to 7 **characterized in that** said intermediate data (Di) is stored in a memory area of the user card with which the terminal is cooperating.

10. A method according to any of claims 1 to 7 **characterized in that** part (Di') of said intermediate data is stored in a memory area of the terminal and the remainder (Di") of said intermediate data is stored in a memory area of the user card with which the terminal is cooperating.

11. A method according to any of claims 8 to 10 **characterized in that** the step of storing intermediate data is executed:
- during manufacture of the terminal, in the case of intermediate data stored in a memory area of the terminal, and
- during manufacture of the user card, in the case of intermediate data stored in in [sic] a memory area of the user card.

12. A method according to any of claims 1 to 11 **characterized in that** changing the terminal from the normal mode to the locked mode requires (63) the transmission to the terminal of a predetermined locking/unlocking code,
and **in that** changing the terminal from the locked mode to the normal mode requires (64) the transmission to the terminal of said unlocking/unlocking [sic] code.

13. A method according to claim 12 **characterized in that** said locking/unlocking code is entered by a user of the terminal via a keypad connected to the terminal.

14. A method according to any of claims 1 to 13 **characterized in that** it further includes, in said locked mode:
- a terminal blocking step (65) during which the content of the memory area of the linked user card in which said first locking data (D1) is stored is at least partially modified (83) to render the terminal unusable even if the user card with which it is cooperating is the linked user card, and
- a terminal unblocking step (66) during which said first locking data (D1) is rewritten (93) into the memory area of the linked user card to render the terminal usable again if the user card with which it is cooperating is the linked user card.

15. A method according to claim 14 **characterized in that** said blocking step (65) is executed when a blocking command is transmitted (81) to the terminal,
and **in that** said unblocking step (66) is executed when an unblocking command is transmitted (91) to the terminal.

16. A method according to claim 15 **characterized in that** said blocking and unblocking commands are ignored by the terminal unless they are accompanied (82; 92) by a predetermined blocking/unblocking code.

17. A method according to either claim 15 or claim 16 **characterized in that** said blocking and unblocking commands are transmitted to the terminal by means of a Short Messages Service.

18. A method according to either claim 15 or claim 16 **characterized in that** said blocking and unblocking commands are transmitted to the terminal by means of a Data Transmission Service.

19. A method according to any of claims 15 to 18 **characterized in that** said blocking and unblocking commands are transmitted to said terminal, constituting the first terminal (T1), from another terminal, constituting the second terminal (T2),
and **in that** the user card (C2) with which said second terminal (T2) is cooperating and the user card (C1) with which said first terminal (T1) is cooperating correspond to the same subscription.

20. A terminal (T) of a cellular mobile radio system, said terminal being of the type adapted to cooperate with a user card (CU) and being able to operate in at least two separate operating modes, namely a normal mode in which it can be used with any user card and a locked mode in which it can be used only with the user card to which it has been locked, constituting the linked user cord,
**characterized in that** it includes means for making its use more secure including:
- a calculation function (A) specific to said terminal (T);
- means for storing first locking data (D1) calculated by said calculation function (A) in a memory area of said linked user card (CU);
- first means for reading said first locking data (D1) in said memory area of the linked user card (CU);
- second means for reading intermediate data (Di) in a memory area accessible to said terminal;
- means for calculating second locking data (D2) from said intermediate data (Di) using said calculation function (A);
- means for comparing said first and second locking data (D1, D2); and
- selective authorization means enabling use of said terminal only in the event of equality, that is to say if the user card with which the terminal is cooperating is authenticated as the linked user card,
said means for making use of a terminal more secure being used, in said locked mode, during a phase of authentication (10) by the terminal (T) of the user card (CU) with which it is cooperating.
